# EUROPEAN PATENT SPECIFICATION

(11) **EP 3 202 549 B1**
(45) Date of publication and mention of the grant of the patent: **01.08.2018**
(21) Application number: 17153444.9
(22) Date of filing: 27.01.2017
(51) Int. Cl.: B29C 45/76, B29C 45/77

(54) **INJECTION MOLDING MACHINE**
SPRITZGIESSMASCHINE
MACHINE DE MOULAGE À INJECTION

(30) Priority: 05.02.2016 JP 2016021009
(43) Date of publication of application: 09.08.2017
(73) Proprietor: Sumitomo Heavy Industries, Ltd., Tokyo 141-6025 (JP)
(72) Inventor: MIYATAKE, Tsutomu, Yokusuka-shi, Kanagawa 237-8555 (JP)
(74) Representative: Louis Pöhlau Lohrentz

(56) References cited:
- WO-A1-2017/015573
- US-A- 6 056 902
- US-B1- 6 258 303
- ROGERS J K: "CLAMP FORCE SENSOR MAY DO AWAY WITH IN-MOLD PRESSURE INDICATORS", MODERN PLASTICS INTERNATIONAL, MCGRAW-HILL,INC. LAUSANNE, CH, vol. 21, no. 4, 1 April 1991 (1991-04-01), page 22,23, XP000237203, ISSN: 0026-8283

## Description

### BACKGROUND OF THE INVENTION

### Field of the Invention

Certain embodiment of the present invention relates to an injection molding machine.

### Description of Related Art

UnitedStates Patent Application US 6 056 902 discloses a method in which plastic material is injected into a mold cavity at a rate sufficient to maintain an unbroken melt front and to avoid any spraying or splashing of the plastic material within the mold cavity. A strain gauge on a support bar is used as a means for detecting an indicia of a decrease in the surface area of the melt front.

An injection molding machine disclosed in Japanese Unexamined Utility Model Registration Application Publication No. 5-53923 includes a cylinder to which resin is supplied, a screw which injects the resin from the tip of the cylinder into a mold, and a load cell which detects the pressure of the resin. A plurality of ball nuts are fixed to a cylinder fixing plate for fixing the cylinder, at symmetrical positions with respect to the cylinder. A ball screw is screwed to each ball nut, and a bearing of each ball screw is held on an injection screw pressing plate. The load cell is interposed between an outer ring of the bearing of one of the ball screws and a stepped portion of a hole of the injection screw pressing plate. The internal pressure of the resin is transmitted to the load cell through the screw, the injection screw pressing plate, and the like.

Conventionally, the detection value of the load cell includes friction resistance or the like of the machine, in addition to the pressure of the resin, and thus variation in the quality of a molding product is large.

### SUMMARY OF THE INVENTION

The present invention has been made in view of the above problem and has a main object to provide an injection molding machine which is fast while variation in the quality of a molding product is reduced.

In order to solve the above problem, according to an aspect of the present invention, there is provided an injection molding machine including: a mold clamping unit which performs mold closing, mold clamping, and mold opening of a mold unit; an injection unit which injects a molding material into the mold unit; a controller which controls the mold clamping unit and the injection unit; and a distortion detector which detects a distortion of the mold unit due to a pressure of the molding material which is filled into the mold unit, in which the controller controls the injection unit, based on a detection value of the distortion detector.

According to the aspect of the present invention, an injection molding machine is provided in which variation in the quality of a molding product is reduced.

### BRIEF DESCRIPTION OF THE DRAWINGS

Fig. 1 is a diagram showing a state at the time of mold opening completion of an injection molding machine according to an embodiment.
Fig. 2 is a diagram showing a state at the time of mold clamping of the injection molding machine according to the embodiment.

### DETAILED DESCRIPTION OF THE INVENTION

Hereinafter, a mode for carrying out the present invention will be described with reference to the drawings. However, in each of the drawings, an identical or a corresponding configuration is denoted by an identical or a corresponding reference numeral and a description thereof is omitted.

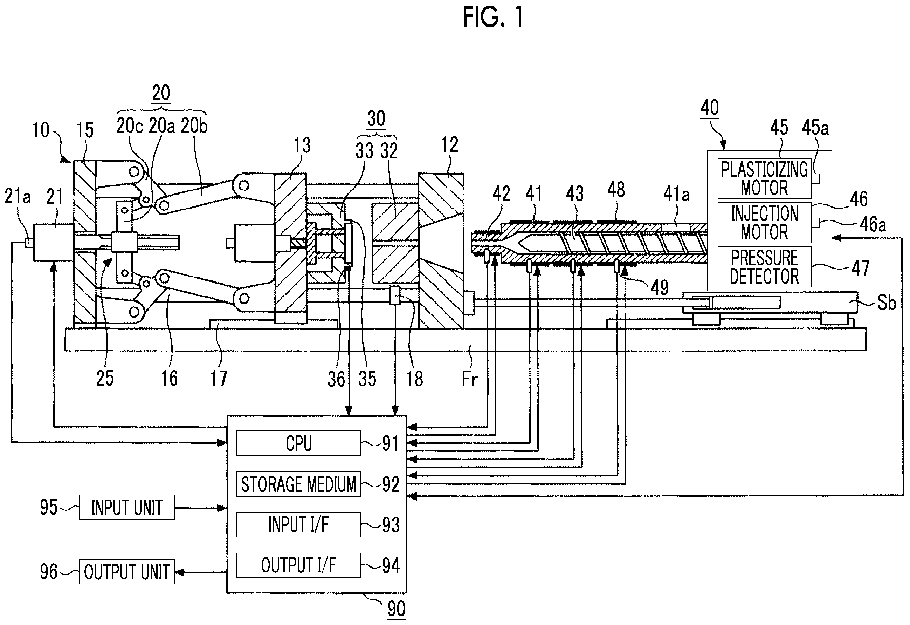

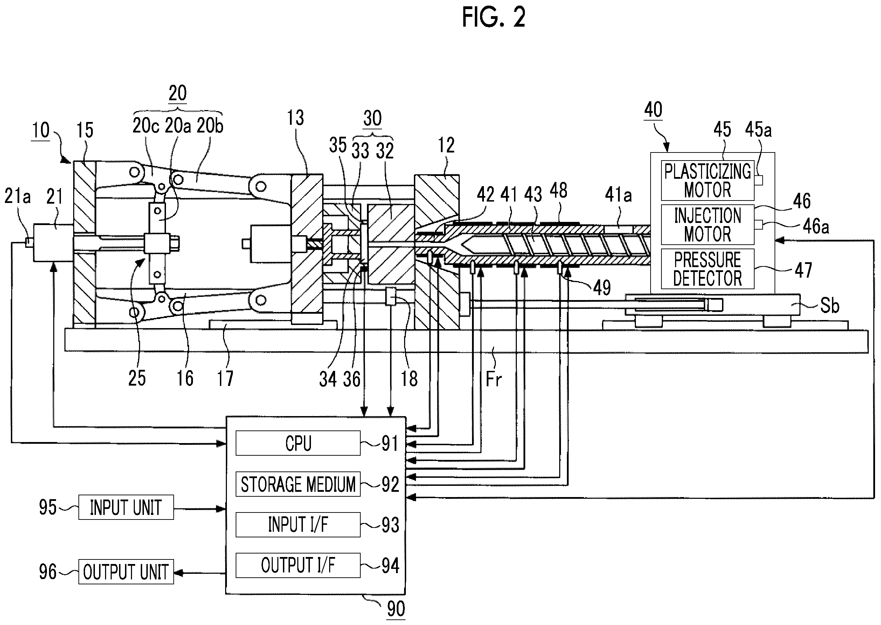

Fig. 1 is a diagram showing a state at the time of mold opening completion of an injection molding machine according to an embodiment. Fig. 2 is a diagram showing a state at the time of mold clamping of the injection molding machine according to the embodiment.

The injection molding machine has a frame Fr, a mold clamping unit 10, an injection unit 40, a controller 90, an input unit 95, and an output unit 96, as shown in Figs. 1 and 2, for example.

First, the mold clamping unit 10 will be described. In the description of the mold clamping unit 10, a direction of movement (a rightward direction in Figs. 1 and 2) of a movable platen 13 when performing mold closing will be described as being forward and a direction of movement (a leftward direction in Figs. 1 and 2) of the movable platen 13 when performing mold opening will be described as being backward.

The mold clamping unit 10 performs mold closing, mold clamping, and mold opening of a mold unit 30. The mold clamping unit 10 has a stationary platen 12, the movable platen 13, a support platen 15, a tie bar 16, a toggle mechanism 20, a mold clamping motor 21, and a motion conversion mechanism 25.

The stationary platen 12 is fixed to the frame Fr. A stationary mold 32 is mounted on the surface facing the movable platen 13 in the stationary platen 12.

The movable platen 13 is made so as to be able to move along a guide (for example, a guide rail) 17 which is laid on the frame Fr, and is made so as to be able to advance and retract with respect to the stationary platen 12. A movable mold 33 is mounted on the surface facing the stationary platen 12 in the movable platen 13.

The movable platen 13 advances and retracts with respect to the stationary platen 12, whereby the mold closing, the mold clamping, and the mold opening are performed. The mold unit 30 is configured of the stationary mold 32 and the movable mold 33.

The support platen 15 is connected to the stationary platen 12 with a distance therebetween and is placed on the frame Fr so as to be able to move in a mold opening and closing direction. The support platen 15 may be made so as to be able to move along a guide which is laid on the frame Fr. The guide for the support platen 15 may be shared by the guide 17 for the movable platen 13.

In this embodiment, a configuration is made such that the stationary platen 12 is fixed to the frame Fr and the support platen 15 is movable in the mold opening and closing direction with respect to the frame Fr. However, a configuration may be made such that the support platen 15 is fixed to the frame Fr and the stationary platen 12 is movable in the mold opening and closing direction with respect to the frame Fr.

The tie bar 16 connects the stationary platen 12 and the support platen 15 with a distance therebetween. A plurality of tie bars 16 may be used. The respective tie bars 16 are made so as to be parallel to each other in the mold opening and closing direction and extend according to a mold clamping force. A tie bar distortion detector 18 is provided at at least one of the tie bars 16. The tie bar distortion detector 18 detects the mold clamping force by detecting a distortion of the tie bar 16 and sends a signal indicating the detection result to the controller 90.

In this embodiment, the tie bar distortion detector 18 is used as a mold clamping force detector. However, the mold clamping force detector is not limited to a distortion gauge type and may be a piezoelectric type, a capacitive type, a hydraulic type, an electromagnetic type, or the like, and a mounting position thereof is also not limited to the tie bar 16.

The toggle mechanism 20 moves the movable platen 13 with respect to the stationary platen 12. The toggle mechanism 20 is disposed between the movable platen 13 and the support platen 15. The toggle mechanism 20 is configured of a cross head 20a, a pair of link groups, and the like. Each link group has a plurality of links 20b and 20c which are connected to each other by a pin or the like so as to be able to be bent and stretched. The link 20b on one side is oscillatably mounted on the movable platen 13, and the link 20c on the other side is oscillatably mounted on the support platen 15. If the cross head 20a is advanced and retracted, the plurality of links 20b and 20c are bent and stretched, whereby the movable platen 13 advances and retracts with respect to the support platen 15.

The mold clamping motor 21 is mounted on the support platen 15 and activates the toggle mechanism 20. The mold clamping motor 21 advances and retracts the cross head 20a, thereby bending and stretching the links 20b and 20c and thus advancing and retracting the movable platen 13.

The motion conversion mechanism 25 converts the rotation motion of the mold clamping motor 21 into linear motion and transmits the linear motion to the cross head 20a. The motion conversion mechanism 25 is configured with, for example, a ball screw mechanism or the like.

An operation of the mold clamping unit 10 is controlled by the controller 90. The controller 90 controls a mold closing process, a mold clamping process, a mold opening process, and the like.

In the mold closing process, the movable mold 33 is brought into contact with the stationary mold 32 by advancing the movable platen 13 by advancing the cross head 20a at a set speed by driving the mold clamping motor 21. The position or the speed of the cross head 20a is detected by, for example, an encoder 21a or the like of the mold clamping motor 21. A signal indicating the detection result is sent to the controller 90.

In the mold clamping process, the mold clamping force is generated by further advancing the cross head 20a to a set position by further driving the mold clamping motor 21. At the time of the mold clamping, a cavity 34 is formed between the movable mold 33 and the stationary mold 32, and the cavity 34 is filled with a liquid molding material. The filled molding material is solidified, whereby a molding product is obtained. The number of cavities 34 may be plural, and in that case, a plurality of molding products are obtained at the same time.

In the mold opening process, the movable mold 33 is separated from the stationary mold 32 by retracting the movable platen 13 by retracting the cross head 20a at a set speed by driving the mold clamping motor 21.

The mold clamping unit 10 of this embodiment has the mold clamping motor 21 as a drive source. However, the mold clamping unit 10 may have a hydraulic cylinder, instead of the mold clamping motor 21. Further, the mold clamping unit 10 may have a linear motor for the mold opening and closing and have an electromagnet for the mold clamping.

Further, the mold clamping unit 10 of this embodiment is a horizontal type in which the mold opening and closing direction is a horizontal direction. However, the mold clamping unit 10 may be a vertical type in which the mold opening and closing direction is a vertical direction.

Next, the injection unit 40 will be described. In the description of the injection unit 40, unlike the description of the mold clamping unit 10, a direction of movement (the leftward direction in Figs. 1 and 2) of a screw 43 when performing filling will be described as being forward and a direction of movement (the rightward direction in Figs. 1 and 2) of the screw 43 when performing plasticizing will be described as being backward.

The injection unit 40 is installed on a slide base Sb capable of advancing and retracting with respect to the frame Fr and made to be able to advance and retract with respect to the mold unit 30. The injection unit 40 is brought into contact with the mold unit 30 and fills the mold unit 30 with the molding material.

The injection unit 40 has, for example, a cylinder 41, a nozzle 42, the screw 43, a plasticizing motor 45, an injection motor 46, a pressure detector 47, a heater 48, and a temperature detector 49.

The cylinder 41 heats the molding material fed from a feed port 41a into the inside thereof. The feed port 41a is formed in a rear portion of the cylinder 41. The heater 48 such as a band heater and the temperature detector 49 are provided at the outer periphery of the cylinder 41.

The cylinder 41 is divided into a plurality of zones in an axial direction (a right-and-left direction in Figs. 1 and 2) of the cylinder 41. The heater 48 and the temperature detector 49 are provided in each zone. The controller 90 controls the heater 48 such that an actually measured temperature of the temperature detector 49 reaches a set temperature, for each zone.

The nozzle 42 is provided at a front end portion of the cylinder 41 and pressed against the mold unit 30. The heater 48 and the temperature detector 49 are provided at the outer periphery of the nozzle 42. The controller 90 controls the heater 48 such that an actually measured temperature of the nozzle 42 reaches the set temperature.

The screw 43 is disposed so as to be rotatable and be able to advance and retract in the cylinder 41. The screw 43 corresponds to an injection member stated in the appended claims . Although the details will be described later, in a case where the injection unit is a pre-plasticizing type, a plunger corresponds to the injection member stated in the appended claims .

The plasticizing motor 45 rotates the screw 43, thereby sending the molding material forward along a helical groove of the screw 43. The molding material is gradually melted by the heat from the cylinder 41 while being sent forward. The screw 43 retracts as the liquid molding material is sent to the front of the screw 43 and accumulated in a front portion of the cylinder 41.

The injection motor 46 advances and retracts the screw 43. The injection motor 46 advances the screw 43, thereby injecting the liquid molding material accumulated in front of the screw 43 from the cylinder 41, whereby the mold unit 30 is filled with the liquid molding material. Thereafter, the injection motor 46 presses the screw 43 forward, thereby applying a pressure to the molding material in the mold unit 30. A molding material can be replenished when there is a shortage thereof due to cooling contraction. A motion conversion mechanism for converting the rotation motion of the injection motor 46 into the linear motion of the screw 43 is provided between the injection motor 46 and the screw 43. This motion conversion mechanism is configured with, for example, a ball screw mechanism. The injection motor 46 corresponds to a drive source stated in the appended claims. As the drive source, a hydraulic cylinder or the like may be used.

The pressure detector 47 is disposed, for example, between the injection motor 46 and the screw 43 and detects a pressure which the screw 43 receives from the molding material, a back pressure against the screw 43, or the like. The pressure which the screw 43 receives from the molding material corresponds to a pressure acting on the molding material from the screw 43. The pressure detector 47 sends a signal indicating the detection result to the controller 90.

An operation of the injection unit 40 is controlled by the controller 90. The controller 90 controls a filling process, a holding pressure process, a plasticizing process, and the like.

In the filling process, the injection motor 46 is driven, thereby advancing the screw 43 at the set speed and thus filling the mold unit 30 with the liquid molding material accumulated in front of the screw 43. The position or the speed of the screw 43 is detected by, for example, an encoder 46a of the injection motor 46. A signal indicating the detection result is sent to the controller 90. If the position of the screw 43 reaches the set position, switching (so-called V/P switching) from the filling process to the holding pressure process is performed. The set speed of the screw 43 may be changed according to the position of the screw 43, a time, or the like.

After the position of the screw 43 reaches the set position in the filling process, the screw 43 may be temporarily stopped at the set position, and thereafter, the V/P switching may be performed. Just before the V/P switching, instead of stopping the screw 43, the screw 43 may be advanced or retracted at a very slow speed.

In the holding pressure process, the injection motor 46 is driven, thereby pressing the screw 43 forward at a set pressure and thus applying pressure to the molding material in the mold unit 30. A molding material can be replenished when there is a shortage thereof due to cooling contraction. The pressure of the molding material is detected by, for example, the pressure detector 47. A signal indicating the detection result is sent to the controller 90.

In the holding pressure process, the molding material in the mold unit 30 is gradually cooled, and at the time of the completion of the holding pressure process, an inlet of the cavity 34 is closed with the solidified molding material. This state is called a gate seal, and back-flow of the molding material from the cavity 34 is prevented. After the holding pressure process, a cooling process is started. In the cooling process, solidification of the molding material in the cavity 34 is performed. The plasticizing process may be performed during the cooling process in order to shorten a molding cycle.

In the plasticizing process, the plasticizing motor 45 is driven, thereby rotating the screw 43 at a set rotational frequency and thus sending the molding material forward along the helical groove of the screw 43. Accordingly, the molding material is gradually melted. The screw 43 retracts as the liquid molding material is sent to the front of the screw 43 and accumulated in the front portion of the cylinder 41. The rotational frequency of the screw 43 is detected by, for example, an encoder 45a of the plasticizing motor 45. A signal indicating the detection result is sent to the controller 90.

In the plasticizing process, in order to restrict the rapid retraction of the screw 43, a setting back pressure may be applied to the screw 43 by driving the injection motor 46. The back pressure against the screw 43 is detected by, for example, the pressure detector 47. A signal indicating the detection result is sent to the controller 90. If the screw 43 retracts to a set position and a predetermined amount of molding material is accumulated in front of the screw 43, the plasticizing process is ended.

The injection unit 40 of this embodiment is an inline screw type. However, the injection unit 40 may be a pre-plasticizing type. In a pre-plasticizing type injection unit, a molding material melted in a plasticizing cylinder is fed into an injection cylinder and the molding material is then injected from the injection cylinder into a mold unit. A screw is disposed in the plasticizing cylinder so as to be rotatable or to be rotatable and be able to advance and retract, and a plunger is disposed in the injection cylinder so as to be able to advance and retract.

The controller 90 has a central processing unit (CPU) 91, a storage medium 92 such as a memory, an input interface 93, and an output interface 94, as shown in Figs. 1 and 2. The controller 90 performs various controls by executing a program stored in the storage medium 92 in the CPU 91. Further, the controller 90 receives a signal from the outside through the input interface 93 and transmits a signal to the outside through the output interface 94.

The input unit 95 receives an input operation of a user and transmits an operation signal corresponding to the input operation of the user to the controller 90. As the input unit 95, for example, a touch panel is used. The touch panel also serves as the output unit 96 (described later).

The output unit 96 displays an operation screen corresponding to the input operation in the input unit 95 under the control by the controller 90. A plurality of operation screens are prepared and are changed over and displayed or displayed with an overlap.

A user performs various settings by operating the input unit 95 while looking at the operation screen which is displayed on the output unit 96. The setting is stored in the storage medium 92 and read out as necessary.

The controller 90 controls the injection unit 40, based on a distortion which is detected by a mold distortion detector 36. The mold distortion detector 36 is mounted on the mold unit 30 and detects a distortion of the mold unit 30, which is caused due to the pressure of the molding material which is filled into the mold unit 30.

The larger the pressure of the molding material which is filled into the mold unit 30 becomes, the larger the distortion of the mold unit 30 becomes. For this reason, the distortion of the mold unit 30 can be used as an index of the pressure of the molding material which is filled into the mold unit 30.

The molding material is molded in the mold unit 30, and therefore, the injection unit 40 is controlled based on the distortion which is detected by the mold distortion detector 36, whereby weight variation of the molding product can be reduced, compared to a case where the injection unit 40 is controlled based on only the pressure which is detected by the pressure detector 47. Further, the distortion of the mold unit 30 can be detected from the outside of the mold unit 30, and therefore, the mold distortion detector 36 can be provided on the outside of the mold unit 30. Accordingly, the mold distortion detector 36 does not come into direct contact with the melted molding material, and therefore, deterioration of the mold distortion detector 36 can be suppressed.

The mold distortion detector 36 may be mounted on an elastic deformation portion 35 of the mold unit 30 and may detect a distortion of the elastic deformation portion 35. The elastic deformation portion 35 is provided at the movable mold 33, as shown in Figs. 1 and 2, for example, and forms the wall surface of the cavity 34. If the molding material reaches the cavity 34, the elastic deformation portion 35 is elastically deformed due to the pressure of the molding material. The elastic deformation portion 35 may be formed at the boundary between the movable mold 33 and the stationary mold 32 so as to be easily elastically deformed.

The elastic deformation portion 35 of this embodiment is provided at the movable mold 33. However, the elastic deformation portion 35 may be provided at the stationary mold 32 and may be provided at each of the movable mold 33 and the stationary mold 32.

Incidentally, if a distortion occurs in the mold unit 30 due to the pressure of the molding material which is filled into the mold unit 30, the thickness of the mold unit 30 changes, and therefore, a distortion also occurs in the tie bar 16. This distortion can be detected by the tie bar distortion detector 18. The tie bar distortion detector 18 can also serve as both the role of a mold clamping force detector and the role of the mold distortion detector 36.

Therefore, the controller 90 may use the tie bar distortion detector 18, instead of the mold distortion detector 36, for the control of the injection unit 40. Further, the controller 90 may use both the mold distortion detector 36 and the tie bar distortion detector 18 for the control of the injection unit 40. The mold distortion detector 36 or the tie bar distortion detector 18 corresponds to a distortion detector stated in the appended claims. Hereinafter, the mold distortion detector 36 and the tie bar distortion detector 18 are collectively referred to simply as a distortion detector. As the distortion detector, any distortion detector is acceptable as long as it detects the distortion of the mold unit 30, which is caused due to the pressure of the molding material which is filled into the mold unit 30, or the distortion of a peripheral member due to the distortion of the mold unit 30. The mounting position of the distortion detector, the number of distortion detectors, and the like are not particularly limited.

The controller 90 may drive the injection motor 46, based on the distortion which is detected by the distortion detector, during the holding pressure process of controlling the pressure acting on the molding material from the screw 43.

For example, the controller 90 may drive the injection motor 46, based on the distortion which is detected by the distortion detector, instead of the pressure which is detected by the pressure detector 47, during the holding pressure process. For example, the controller 90 drives the injection motor 46 such that the distortion which is detected by the distortion detector reaches a setting value of a distortion, during the holding pressure process. The setting value of a distortion is determined by, for example, test molding or the like, and a setting value stored in the storage medium 92 in advance is read out and used. In the test molding, the injection motor 46 is driven such that the pressure which is detected by the pressure detector 47 reaches a setting value of a pressure, during the holding pressure process . The distortion detected by the distortion detector during the holding pressure process when a good molding product is obtained by the test molding is used as the setting value of a distortion.

Further, the controller 90 may drive the injection motor 46, based on both the pressure which is detected by the pressure detector 47 and the distortion which is detected by the distortion detector, during the holding pressure process. For example, the controller 90 corrects the difference between the pressure which is detected by the pressure detector 47 and the setting value of a pressure, based on the difference between the distortion which is detected by the distortion detector and the setting value of a distortion, and drives the injection motor 46 such that the difference after the correction becomes zero, during the holding pressure process. Here, the controller 90 may correct the pressure which is detected by the pressure detector 47 or correct the setting value of a pressure, in order to correct the difference between the pressure which is detected by the pressure detector 47 and the setting value of a pressure.

The controller 90 may monitor the distortion which is detected by the distortion detector, during the filling process of controlling the speed of the screw 43.

For example, the controller 90 may output an alarm in a case where the distortion which is detected by the distortion detector exceeds the setting value, during the filling process.

Further, during the filling process, in a case where the distortion which is detected by the distortion detector exceeds the setting value, the controller 90 may correct the setting value of the speed of the screw 43 such that the distortion does not exceed the setting value. The correction may be performed during the filling process in which the distortion exceeds the setting value, or may be performed after the ending of the filling process in which the distortion exceeds the setting value and before the start of the next filling process . In the former case, the controller 90 may correct the detection value of the speed of the screw 43 such that the distortion does not exceed the setting value.

The embodiment of the injection molding machine has been described above. However, the present invention is not limited to the above-described embodiment, and various modifications or improvements can be made within the scope of the concept of the present invention stated in the appended claims.

### Brief Description of the Reference Symbols

10: mold clamping unit
12: stationary platen
13: movable platen
15: support platen
18: tie bar distortion detector
20: toggle mechanism
21: mold clamping motor
21a: encoder
30: mold unit
32: stationary mold
33: movable mold
34: cavity
35: elastic deformation portion
36: mold distortion detector
40: injection unit
41: cylinder
42: nozzle
43: screw
45: plasticizing motor
45a: encoder
46: injection motor
46a: encoder
47: pressure detector
90: controller

## Claims

1. An injection molding machine comprising:
a mold clamping unit (10) which is configured to perform mold closing, mold clamping, and mold opening of a mold unit (30) ;
an injection unit (40) which is configured to inject a molding material into the mold unit (30);
a controller (90) which is configured to control the mold clamping unit (10) and the injection unit (40); and
a distortion detector which is configured to detect a distortion of the mold unit (30) due to a pressure of the molding material which is filled into the mold unit (30),
wherein the controller (90) is configured to control the injection unit (40), based on the distortion which is detected by the distortion detector,
wherein the injection unit (40) includes a cylinder (41) into which the molding material is supplied, an injection member (43) which is configured to advance and retract in the cylinder (41), and a drive source (46) which is configured to advance and retract the injection member (43), and advance the injection member (43), thereby injecting the molding material which is accumulated in front of the injection member (43), from the cylinder (41) into the mold unit (30),
wherein the controller (90) is configured to drive the drive source (46), based on the distortion which is detected by the distortion detector, during a holding pressure process of controlling a pressure acting on the molding material from the injection member (43), and
wherein the injection unit (40) further includes a pressure detector (47) which is disposed between the injection member (43) and the drive source (46) and is configured to detect the pressure acting on the molding material from the injection member (43), and the controller (90) is configured to drive the drive source (46), based on a pressure which is detected by the pressure detector (47) and the distortion which is detected by the distortion detector, during the holding pressure process.

2. The injection molding machine according to Claim 1, wherein the mold clamping unit (10) includes a tie bar (16) which extends according to a mold clamping force, and
the distortion detector (18) is configured to detect a distortion of the tie bar (16) due to the distortion of the mold unit (30).

3. The injection molding machine according to Claim 1 or 2, wherein the controller (90) is configured to monitor the distortion which is detected by the distortion detector, during a filling process of controlling a speed of the injection member (43).

## Patentansprüche

1. Spritzgießmaschine, umfassend:
eine Formzuhalteeinheit (10), die so ausgebildet ist, dass sie das Formschließen, Formzuhalten und Formöffnen einer Formeinheit (30) durchführt,
eine Einspritzeinheit (40), die so ausgebildet ist, dass sie einen Gießwerkstoff in die Formeinheit (30) einspritzt,
eine Steuerung (90), die so ausgebildet ist, dass sie die Formzuhalteeinheit (10) und die Einspritzeinheit (40) steuert, und
einen Verformungsdetektor, der so ausgebildet ist, dass er eine Verformung der Formeinheit (30) aufgrund eines Drucks des in die Formeinheit (30) eingespritzten Gießwerkstoffs detektiert,
wobei die Steuerung (90) so ausgebildet ist, dass sie die Einspritzeinheit (40) steuert, basierend auf der Verformung, die durch den Verformungsdetektor detektiert wurde,
wobei die Einspritzeinheit (40) einen Zylinder (41), dem der Gießwerkstoff zugeführt wird, ein Einspritzbauteil (43), das so ausgebildet ist, dass es sich in dem Zylinder (41) nach vorn und hinten bewegt, und eine Antriebsquelle (46), die so ausgebildet ist, dass sie das Einspritzbauteil (43) nach vorn und nach hinten bewegt, und dass sie das Einspritzbauteil (43) nach vorn bewegt, wodurch der vordem Einspritzbauteil (43) angesammelte Gießwerkstoff von dem Zylinder (41) in die Formeinheit (30) eingespritzt wird,
wobei die Steuerung (90) so ausgebildet ist, dass sie die Antriebsquelle (46) während eines Druckhaltevorgangs, bei dem ein von dem Einspritzbauteil (43) auf den Gießwerkstoff wirkender Druck gesteuert wird, basierend auf der Verformung antreibt, die durch den Verformungsdetektor detektiert wurde, und
wobei die Einspritzeinheit (40) weiter einen Drucksensor (47) umfasst, der zwischen dem Einspritzbauteil (43) und der Antriebsquelle (46) angeordnet und so ausgebildet ist, dass er den von dem Einspritzbauteil (43) auf den Gießwerkstoff wirkenden Druck detektiert, und die Steuerung (90) so ausgebildet ist, dass sie die Antriebsquelle (46) während des Druckhaltevorgangs basierend auf einem Druck, der von dem Drucksensor (47) detektiert wurde, und auf der Verformung, die durch den Verformungsdetektor detektiert wurde, steuert.

2. Spritzgießmaschine nach Anspruch 1,
wobei die Formzuhalteeinheit (10) eine Säule (16) umfasst, die sich entsprechend einer Formzuhaltekraft verlängert, und
der Verformungsdetektor (18) so ausgebildet ist, dass er eine Verformung der Säule (16) aufgrund der Verformung der Formeinheit (30) detektiert.

3. Spritzgießmaschine nach Anspruch 1 oder 2,
wobei die Steuerung (90) so ausgebildet ist, dass sie während eines Einspritzvorgangs, bei dem eine Geschwindigkeit des Einspritzbauteils (43) gesteuert wird, die Verformung, die durch den Verformungsdetektor detektiert wird, überwacht.

## Revendications

1. Machine de moulage par injection comprenant :
une unité de serrage de moule (10) qui est configurée pour effectuer une fermeture de moule, un serrage de moule, et une ouverture de moule d'une unité de moule (30) ;
une unité d'injection (40) qui est configurée pour injecter un matériau de moulage dans l'unité de moule (30) ;
un contrôleur (90) qui est configuré pour contrôler l'unité de serrage de moule (10) et l'unité d'injection (40) ; et
un détecteur de distorsion qui est configuré pour détecter une distorsion de l'unité de moule (30) due à une pression du matériau de moulage qui est placé dans l'unité de moule (30),
dans lequel le contrôleur (90) est configuré pour contrôler l'unité d'injection (40), sur la base de la distorsion qui est détectée par le détecteur de distorsion,
dans lequel l'unité d'injection (40) comprend un cylindre (41) dans lequel le matériau de moulage est fourni, un élément d'injection (43) qui est configuré pour avancer et se rétracter dans le cylindre (41), et une source d'entraînement (46) qui est configurée pour faire avancer rétracter l'élément d'injection (43), et pour faire avancer l'élément d'injection (43), afin d'injecter le matériau de moulage qui est accumulé en face de l'élément d'injection (43), du cylindre (41) vers l'unité de moule (30),
dans lequel le contrôleur (90) est configuré pour entraîner la source d'entraînement (46), sur la base de la distorsion qui est détectée par le détecteur de distorsion, pendant un processus de maintien de pression qui consiste à contrôler une pression qui agit sur le matériau de moulage depuis l'élément d'injection (43), et
dans lequel l'unité d'injection (40) comprend en outre un détecteur de pression (47) qui est disposé entre l'élément d'injection (43) et la source d'entraînement (46) et est configuré pour détecter la pression qui agit sur le matériau de moulage depuis l'élément d'injection (43), et le contrôleur (90) est configuré pour entraîner la source d'entraînement (46), sur la base d'une pression qui est détectée par le détecteur de pression (47) et de la distorsion qui est détectée par le détecteur de distorsion, pendant le processus de maintien de pression.

2. Machine de moulage par injection selon la revendication 1, dans laquelle l'unité de serrage de moule (10) comprend une barre de liaison (16) qui s'étend selon une force de serrage de moule, et
le détecteur de distorsion (18) est configuré pour détecter une distorsion de la barre de liaison (16) due à la distorsion de l'unité de moule (30).

3. Machine de moulage par injection selon la revendication 1 ou 2, dans laquelle le contrôleur (90) est configuré pour surveiller la distorsion qui est détectée par le détecteur de distorsion, pendant un processus de remplissage qui consiste à contrôler une vitesse de l'élément d'injection (43).
